# EUROPEAN PATENT SPECIFICATION

(11) **EP 1 620 686 B1**
(45) Date of publication and mention of the grant of the patent: **13.08.2008**
(21) Application number: 04730489.4
(22) Date of filing: 30.04.2004
(51) Int. Cl.: F25D 21/02, G01K 11/12

(54) **TEMPERATURE CONTROL USING ULTRAVIOLET MEASUREMENT LIGHT**
TEMPERATURREGELUNG MIT ULTRAVIOLETTEM MESSLICHT
REGULATION DE TEMPERATURE AU MOYEN D'UNE LUMIERE DE MESURE ULTRAVIOLETTE

(30) Priority: 03.05.2003 DK 200300668
(43) Date of publication of application: 01.02.2006
(73) Proprietor: Dantherm Air Handling A/S, 7800 Skive (DK)
(72) Inventor: ENKESHAFI, Ali, Asghar, DK-7800 Skive (DK)
(74) Representative: Milanov, Nina Vendela Maria
(86) International application number: PCT/DK2004/000295
(87) International publication number: WO 2004/099689

(56) References cited:
- US-A- 5 118 200
- US-A- 5 796 106

## Description

### FIELD OF THE INVENTION

The present invention relates to a method and an apparatus for detecting ice or frost formation on an object and controlling the temperature of an object. The invention further relates to a dehumidifier for lowering the humidity in an environment.

### BACKGROUND OF THE INVENTION

Prior art refrigeration or dehumidifier defrosting units generally involve use of a heater to remove frost and ice from evaporator (cooling) coils. In a domestic refrigerator, which is self defrosting, the refrigeration coils are located adjacent to an electric heater, which operates on a timer and turns on periodically to allow ice, which accumulates on the cooling coils to defrost. Somewhat similarly, large industrial refrigeration units also include a heating, defrost cycle, but unlike the domestic refrigerator units, they generally provide control valves, which evacuate refrigerant from the cooling coils and add a heating fluid directly into the cooling coils to melt ice on the surface of the coils. Both the home refrigerator's automatic defrost cycle and the industrial defrost arrangements are cycled to turn on periodically without specific determination of the amount of frost and ice built up on the cooling (evaporator) coils. In extremely humid environments, excessive ice can build up and render the unit virtually inoperative, because the ice build-up restricts the flow of air across the cooling coils. When the circulating air is blocked, the cooling effect of the refrigeration unit is lost, unit efficiency plummets, and the cost of cooling rises dramatically. The energy efficiency ratio (EER, which is the ratio of energy provided to the system compared with the cooling effect produced) decreases dramatically. Further, when the humidity is relatively low, defrosting is not required on such a frequent basis. Conventional automatic defrost cycles do not monitor frost and ice build-up. Such systems are only time dependent and use a fixed (adjustable) defrosting cycle without regard for the presence or absence of ice on the cooling coils.

In US 4045971 a frost sensor for detecting the presence of frost in a refrigeration device is described. The sensor includes a light impervious enclosure having an air passage through it. Further means are provided for directing ambient air through the air passage, and the air passage has thermal conducting means mounted in it. The thermal conducting means has a first surface forming a portion of the air passage, and a connection device is provided for attaching the conducting means to the refrigeration device. A photocell and a light source are mounted so that the photocell senses reflectivity of the conductive means. A problem is that the frost is detected indirectly by detecting frost on thermal conducting means physically connected to the refrigeration device. First of all, the indirect detection introduces a delay from the time frost is generated on the refrigeration device until frost is generated on the thermal conducting means. In general, the indirect detection also introduces an uncertain frost detection process, which depends on the material, which has been used for forming the conductive means. Another problem of the necessary physical connection is that it requires that the frost sensor is designed for specific refrigeration devices, and further also for mounting on specific positions on the refrigeration devices.

In DD A 152404 a method and an apparatus for controlling the temperature of an object is described comprising transmitting light toward the surface and detecting reflected light based on which the temperature is controlled. Using the method described requires that the distance between the light source and a measure point is kept so small, that the light emitter is able to detect reflected light, alternatively the size of the light emitter has to be increased together with the power of the emitted light which would transfer heat to the surface and thereby disturb the frost generation in the measure point. The light radiates heat, which results in that the temperature of the measure point increases before the frost is generated, whereas in the neighbouring areas of the measure point frost is generated. This results in that the frost is not detected timely by the detector decreasing the efficiency, and it also makes it difficult to control the detector in varying temperature conditions.

US 5796106 disclose a detector for detecting water, frost or ice build up on a surface. The detector comprises a radiation transmitter, a radiation receiver and a sensing surface. The radiation transmitter emits light towards the sensing surface and the radiation receiver receives the light reflected from or transmitted through the sensing surface. The radiation receiver converts the received light into an electrical signal proportional to the intensity of the received light. This detector is based on the physical principle that the reflection and transmission index of the sensing surface is changed when water, frost or ice is build up on the sensing surface, such that the amount of light reflected from the sensing surface increases when water, frost or ice builds up on the sensing surface and such that the amount of light transmitted through the sensing surface decreases when water, frost or ice builds up on the sensing surface. Water, frost or ice build up on the sensing surface is therefore registered when the amount of light reflected from or transmitted through the sensing surface exceeds a threshold value.

### OBJECT AND SUMMARY OF THE INVENTION

It is an object of the present invention to provide a solution to the above-mentioned problems.

This is obtained by a method of detecting ice or frost formation on an object and controlling the temperature of an object, the method comprising the steps of exposing at least a part of the surface of said object with ultraviolet light from a light source, detecting visible light reflected from frost generated on said surface and controlling the temperature of said object based on the detected visible light reflected from said frost generated on said surface. By using ultraviolet light no heat is transmitted to the surface of the object, which influences the temperature of the surface and e.g. delays the generation of frost in the measure point. Further, when using ultraviolet light, visible light is reflected when frost is generated, which makes the reflected light easier to detect. When using ultraviolet light ice crystals reflect more of the light, than when using visible light. Thereby less energy is used by the detector system.

Further the temperature of various objects can be controlled by detecting a temperature related colour of the surface of the object. When the method is used e.g. for controlling the temperature of the evaporator coils in e.g. a dehumidifier, then as soon as frost is generated, the colour white is detected, and the temperature of the evaporator is raised to melt the frost until the colour white is removed from the surface. When frost is detected directly on the surface, it is both faster and safer than conventional defrosting detection methods. Further, there does not need to be any physical contact between the detector performing the method and the surface of the object, minimising temperature transfers from the object to the detector. Further, the detector performing the method can easily be mounted and moved to other destinations for optimising the controlling method e.g. in a dehumidifier.

In an embodiment the step of controlling the temperature of said object comprises changing the temperature of said object when said visible light is being detected. This is a simple method of determining when to change the temperature, and further it is a very precise way of detecting the frost, and finally the thickness of the frost can be detected by measuring the degree of white.

In an embodiment said temperature is changed for a predefined period. Thereby the method is easy and simple to handle. In the case of using the method for defrosting purposes, it requires knowledge about the defrosting time.

In another embodiment said temperature is changed until said visible light is not being detected. When using the method for defrosting purposes, the defrosting time is minimised. This results in the use of less energy.

In an embodiment said object is a cooling unit, and the temperature of the cooling unit is controlled based on the colour of the surface of said cooling unit. The method can advantageously be used to control the temperature in a cooling unit, whereby the frost generation on the cooling unit is minimised. The method could e.g. be used for defrosting cooling units such as freezing units, e.g. the type of freezing units using dry cooled air and where the cooling surface is mounted outside the freezer. The method could also be used in refrigerators for defrosting the cooling surface.

The invention also relates to an apparatus for detecting ice or frost formation on an object and controlling the temperature of an object, the apparatus comprising;
- a light source adapted for exposing at least a part of the surface of said object with light,
- a light detector adapted for detecting visible light reflected from frost generated on said surface,
- means for controlling the temperature of said object based on the detected visible light from said frost generated on said surface.

The invention also relates to a dehumidifier for lowering the humidity in an environment, said dehumidifier comprising a cooling unit and said dehumidifier further comprising an apparatus for controlling the temperature according to the present invention. Especially in dehumidifiers the generation of frost is a problem, and therefore the present invention can be advantageously used for defrosting these.

### BRIEF DESCRIPTION OF THE DRAWINGS

In the following preferred embodiments of the invention will be described referring to the figures, where
figure 1 illustrates a temperature controller according to the present invention,
figure 2 illustrates a dehumidifier,
figure 3 illustrates evaporator coils in a dehumidifier,
figure 4 illustrates the temperature detector used for detecting frost on the evaporator coils in a dehumidifier,
figure 5 illustrates a block diagram of a method of detecting a temperature according to the present invention,
figure 6 is a curve illustrating the effect of using a temperature detector for detecting frost in dehumidifier based on evaporator coils, the effect is compared to an approach based on predefined time intervals,
figure 7 is a curve illustrating the effect of using a temperature detector for detecting frost in dehumidifier based on evaporator plate, the effect is compared to an approach based on predefined time intervals,
figure 8 illustrates the apparatus according to the present invention used for detecting hoar on car windows,
figure 9 illustrates the apparatus according to the present invention used for detecting the temperature level of elements being heated in an oven.

### DESCRIPTION OF PREFERRED EMBODIMENTS

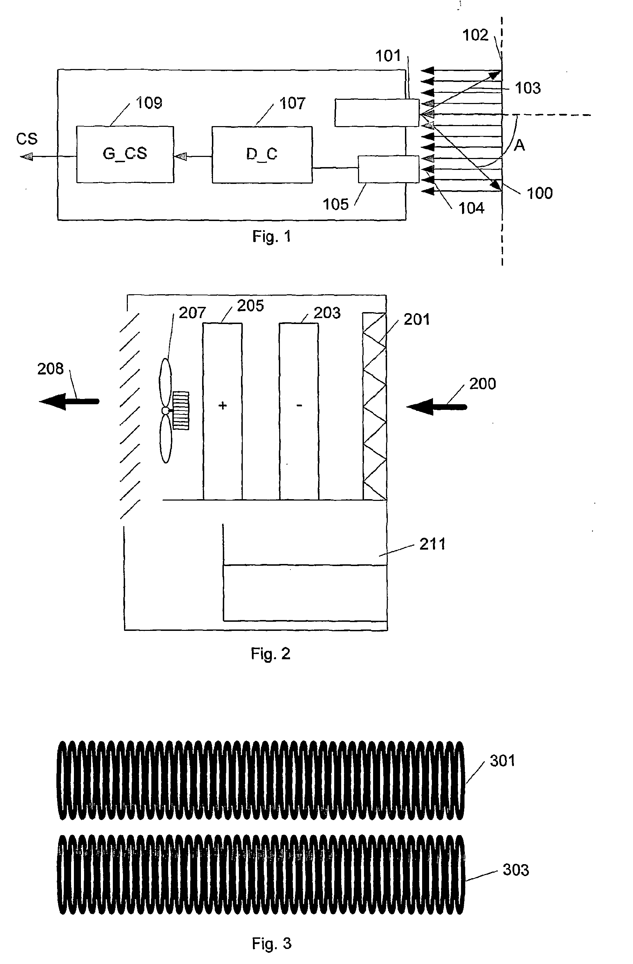

In figure 1 an apparatus for detecting ice or frost formation on an object and controlling the temperature of an object according to the present invention is illustrated. The apparatus comprises a light source 101 for transmitting light 103 to a surface 102 of the object 100. The detector further comprises a light detector 105 for detecting the light 104 reflected from the surface 102. In 107 the detected light is converted to a value representing the colour of the surface 102 and finally in 109, based on the determined colour, the temperature of the object is controlled. This could e.g. be by stopping or starting a heating process, or by stopping or starting a cooling process. The light from the light source 101 is spread on the surface 102 with an angle A ensuring that reflected light is detected by the light detector 105. This angle, together with the distance between the light source 101 and the light detector 105, can be used to ensure that reflected light is received by the light detector 105, so that e.g. when the angle increases the distance between the light detector 105 and light source 101 can be larger.

In general, the invention could be used to ensure that an object is defrosted by heating the object when the surface changes colour as a result of frost on the surface. Alternatively, the invention could also be used for cooling an object when the object becomes red glowing. In both cases it is important that the colour of the surface is different from the colours on which the controlling is based. The general concept of the present invention is to use a change of surface colour to determine when to actively change the temperature of the object, and examples of such temperature dependent colours are white (frost, hoar), which can be removed by heating, or red (glowing), which can be changed by cooling.

In the following a more specific example will be given, where a temperature controller according to the present invention is used in a dehumidifier for avoiding frost on the cooling unit or evaporator, which significantly reduces the performance of the dehumidifier.

Figure 2 illustrates a dehumidifier in which a temperature controller according to the present invention advantageously can be mounted. The dehumidifier is a unit for removing humidity from the air in a room by letting air pass through the unit, where the fan 207 transports the air through the dehumidifier. The dehumidifier comprises a filter 201 ensuring that only air can pass the filter and thereby removes dust and other particles. The dehumidifier further comprises an evaporator 203, and when the air passes the evaporator, it cools to under dew point with the result that water vapour condenses and collects in the water container 211. The dehumidifier further comprises a condenser 205, which could be a hot coil reheating the air before it is blown into the room at a slightly higher temperature than when it was first drawn in the dehumidifier at 200. The expelled dry air 208 then mixes with the room air again, and in a continuous process, the room's relative humidity is gradually brought down.

Figure 3 illustrates an embodiment of an evaporator in a dehumidifier; this could be a number of parallel coils 301, 303 through which a cooler fluid flows, whereby a relatively low temperature of the coils can be maintained. When moist air passes passages of the evaporator coils, both through the passages between the coils, but also passages between the windings of the coils, then the temperature of the air is lowered, and the water in the moist air condenses. In the process of cooling down the air some of the water may change to frost and stick to the surface of the coils, and if the coils are not defrosted, then it will result in the passages being blocked by frost, which again results in that more energy is needed to cool down the air.

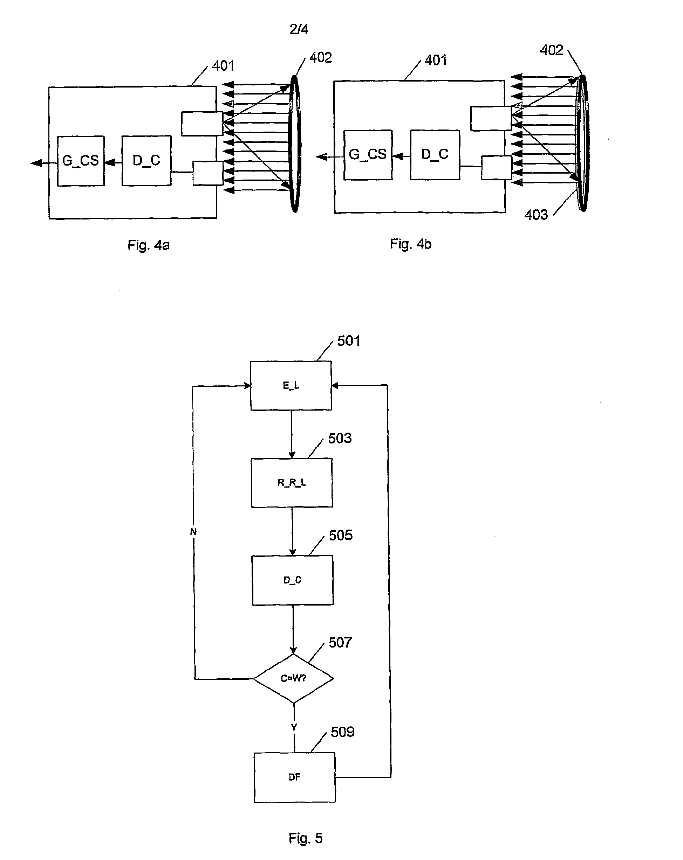

Figure 4a and 4b illustrates the apparatus of the present invention used for controlling the temperature of the evaporator coils in a dehumidifier for removing frost from the surface of the evaporator coils. The apparatus 401 points towards the surface of a winding 402 of the coils, and when there is no frost on the coils, the apparatus detects a colour on the surface of the coils e.g. corresponding to the colour of the material of which the coils has been made or corresponding to the colour of the surface coating of the coils. The colour of the surface of the coils should be different from the colour of frost in order for the apparatus to function properly.

In figure 4a the colour of the coil surface 402 is detected, and no frost is present on the coils. Therefore the temperature does not need to be controlled. In figure 4b there is frost 404 on the surface of the coils 402, and in this case the apparatus 401 detects that the surface is white, which is the colour of frost. The apparatus therefore starts the process of defrosting the coils, e.g. by letting a warm liquid flow through the coils until the frost has melted. This defrosting could e.g. be performed until the coils are no longer white, and the colour of the coil surface is detected again. Alternatively, the defrosting could be performed for a predefined period of time depending on the temperature of the warm liquid.

When using the apparatus for detecting frost, it is an advantage that the light is light without energy. When using ordinary light, the light radiates heat, which results in that the temperature of the measure point increases before the frost is generated, whereas in the neighbouring areas of the measure point frost is generated. This results in that the frost is not detected timely by the detector decreasing the efficiency, and it also makes it difficult to control the detector in varying temperature conditions. Light without radiant heat is light with short wavelengths also called invisible light, such as shortwave ultra violet light, which in the colour spectrum also is referred to as UVA, UVB and UVC. Ultraviolet UVA light, which in the colour spectrum is very close to violet light, is known from solariums and such light cannot transfer energy to the dry surface of a measure point.

Figure 5 illustrates a block diagram of a method of defrosting the evaporator coils in a dehumidifier using a temperature controller according to the present invention. In 501 light is emitted towards the evaporator coils of the dehumidifier, and then in 503 some of the light reflected from the surface of the evaporator coils is received by the light detector. In 505, based on the light reflected, the colour of the surface is determined by using knowledge about reflection properties of the surface of the evaporator both with and without frost - e.g. white reflects all light, whereas black does not reflect any light.

In 507 the controller has determined the colour of the surface of the evaporator coils, and if the colour is white then in 509 a defrosting process is performed e.g. for a predetermined period of time, or until the colour white can no longer be detected on the surface, and the detection process can start from the beginning at 501 again. If the colour white is not detected, then there is no frost on the evaporator coils, and the detection process can start from 501. In order to ensure that frost is timely detected, the controller could be strategically positioned near parts of the evaporator being especially exposed to frost.

When using ultraviolet light, the white frost will reflect visible light. Thereby non heat transferring invisible light is used to expose the surface of the evaporator, and when the surface becomes white because of frost, visible light can easily be detected.

The detector can be positioned at strategic places on the evaporator based on where the user wants the frost detection to be performed. The frost in an evaporator is normally not generated until the frost fluid enters the evaporators and then slowly generating on the total surface as the frost fluid moves through the evaporator. Therefore, by placing the detector where the fluid enters the evaporator, it can be ensured that frost is only generated on a small part of the surface of the evaporator before defrosting, whereas when the detector is placed at the end of the evaporator, then the defrosting process will not start until the whole surface is covered with frost.

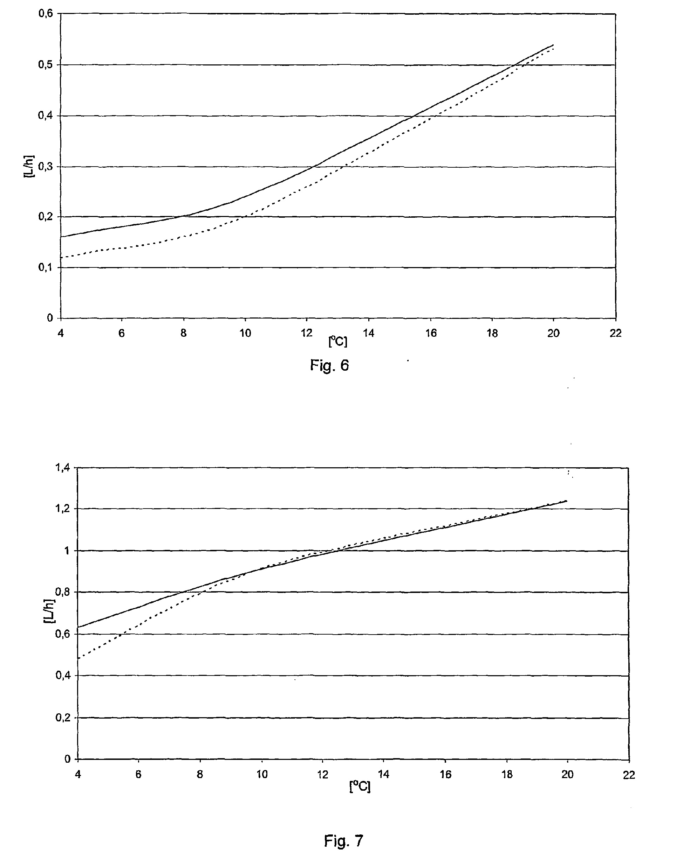

Figure 6 and 7 represent a curve illustrating the effect of using an apparatus according to the present invention for detecting frost in a dehumidifier based on evaporator coils compared to an approach based on predefined time intervals. In both cases it can be seen that especially at low temperatures a dehumidifier using a temperature controller according to the present invention is much more effective

An example has been given where the apparatus according to the present invention has been used for detecting frost in a dehumidifier. Alternatively, the apparatus could also be used to detect frost in other devices comprising cooling coils, such as a refrigerator or a freezer.

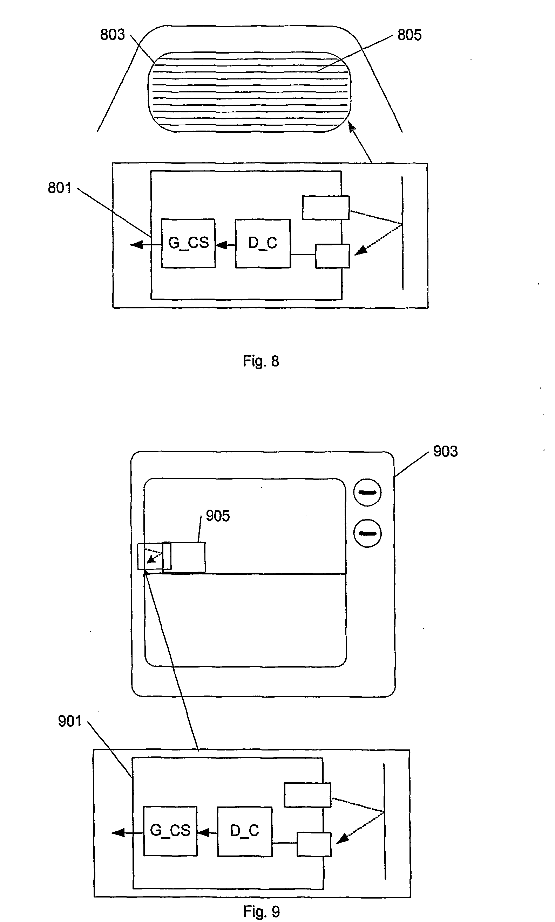

Figure 8 illustrates the apparatus according to the present invention used for detecting hoar or frost on a car window. Here the apparatus 801 points towards the surface of the window 803. When a predefined amount of light is reflected, then hoar or frost has been generated on the surface, and the surface is heated via the heat wires 805, whereby the frost melts or the hoar evaporates.

Figure 9 illustrates the apparatus according to the present invention used for detecting the temperature level of objects being heated in an oven. In specific heating processes it is important that the heating process is terminated immediately when the objects become red glowing. In this example the apparatus 901 is mounted in the side of the oven 903 and transmits light towards the object 905. Based on the reflected light, it can be determined when the object 805 becomes red glowing, and the heating process is stopped immediately by the apparatus 801.

It should be noted that the above-mentioned embodiments illustrate rather than limit the invention, and that those skilled in the art will be able to design many alternative embodiments without departing from the scope of the appended claims. The word 'comprising' does not exclude the presence of other elements or steps than those listed in a claim. In claims enumerating several means, several of these means can be embodied by one and the same item of hardware. The mere fact that certain measures are recited in mutually different dependent claims does not indicate that a combination of these measures cannot be used to advantage.

## Claims

1. A method of detecting ice or frost formation on an object and controlling the temperature of an object, the method comprising the steps of;
- exposing at least a part of the surface of said object with ultraviolet light from a light source, **characterised by**
- detecting visible light reflected from frost generated on said surface,
- controlling the temperature of said object based on the detected visible light from said frost generated on said surface.

2. A method according to claim 1, wherein the step of controlling the temperature of said object comprises changing the temperature of said object when said visible light is being detected.

3. A method according to claim 2, wherein said temperature is changed for a predefined period of time.

4. A method according to claim 2, wherein said temperature is changed until said visible light is not being detected.

5. A method according to claim 1-4, wherein said object is a cooling unit and the temperature of the cooling unit is controlled based on said visible light.

6. A method according to claim 5, wherein the step of controlling the temperature of the object comprises raising the temperature, when said visible light is detected from said frost generated on the surface of the cooling unit.

7. An apparatus for detecting ice or frost formation on an object and controlling the temperature of an object, the apparatus comprising;
- a light source adapted for exposing at least a part of the surface of said object with ultraviolet light, **characterised by**
- a light detector adapted for detecting visible light reflected from frost generated on said surface,
- means for controlling the temperature of said object based on the detected visible light from said frost generated on said surface.

8. A dehumidifier for lowering the humidity in an environment, said dehumidifier comprising a cooling unit and said dehumidifier further comprising an apparatus for controlling the temperature according to claim 7.

## Patentansprüche

1. Verfahren zum Detektieren von Eisbildung oder Frostbildung an einem Gegenstand und Steuern der Temperatur eines Gegenstandes, wobei das Verfahren folgende Schritte umfasst:
- Bestrahlen von mindestens einem Teil der Oberfläche des Gegenstandes mit ultraviolettem Licht von einer Lichtquelle, **gekennzeichnet durch**:
- Detektieren von sichtbarem Licht, das von Frost reflektiert wird, das sich an der Oberfläche gebildet hat,
- Steuern der Temperatur des Gegenstandes auf der Grundlage des detektierten sichtbaren Lichts von dem Frost, das sich an der Oberfläche gebildet hat.

2. Verfahren nach Anspruch 1, wobei der Schritt des Steuerns der Temperatur des Gegenstandes umfasst, die Temperatur des Gegenstandes zu ändern, wenn das sichtbare Licht detektiert wird.

3. Verfahren nach Anspruch 2, wobei die Temperatur für einen vorgegebenen Zeitraum geändert wird.

4. Verfahren nach Anspruch 2, wobei die Temperatur geändert wird, bis das sichtbare Licht nicht mehr detektiert wird.

5. Verfahren nach Anspruch 1-4, wobei der Gegenstand eine Kühleinheit ist und die Temperatur der Kühleinheit auf der Grundlage des sichtbaren Lichts gesteuert wird.

6. Verfahren nach Anspruch 5, wobei der Schritt des Steuerns der Temperatur des Gegenstandes umfasst, die Temperatur zu erhöhen, wenn das sichtbare Licht von dem Frost detektiert wird, das sich auf der Oberfläche der Kühleinheit gebildet hat.

7. Vorrichtung zum Detektieren von Frostbildung an einem Gegenstand und Steuern der Temperatur eines Gegenstandes, wobei die Vorrichtung umfasst:
- eine Lichtquelle, die dafür geeignet ist, mindestens einen Teil der Oberfläche des Gegenstandes mit ultraviolettem Licht zu bestrahlen, **gekennzeichnet durch**:
- einen Lichtdetektor, der dafür geeignet ist, sichtbares Licht zu detektieren, das von Frost reflektiert wird, das sich an der Oberfläche gebildet hat,
- ein Mittel zum Steuern der Temperatur des Gegenstandes auf der Grundlage des detektierten sichtbaren Lichts von dem Frost, das sich an der Oberfläche gebildet hat.

8. Entfeuchter zum Senken der Feuchtigkeit in einer Umgebung, wobei der Entfeuchter eine Kühleinheit umfasst und der Entfeuchter des Weiteren eine Vorrichtung zum Steuern der Temperatur nach Anspruch 7 umfasst.

## Revendications

1. Procédé de détection de la formation de glace ou de gel sur un objet et de contrôle de la température d'un objet, le procédé comprenant les étapes consistant à :
- exposer au moins une partie de la surface dudit objet à une lumière ultraviolette provenant d'une source lumineuse, **caractérisé par**
- détecter une lumière visible réfléchie par le gel généré sur ladite surface,
- contrôler la température dudit objet sur la base de la lumière visible détectée à partir dudit gel généré sur ladite surface.

2. Procédé selon la revendication 1, dans lequel l'étape de contrôle de la température dudit objet comprend la modification de la température dudit objet lorsque ladite lumière visible est en cours de détection.

3. Procédé selon la revendication 2, dans lequel ladite température est modifiée pour une période de temps prédéfinie.

4. Procédé selon la revendication 2, dans lequel ladite température est modifiée jusqu'à ce que ladite lumière visible ne soit plus détectée.

5. Procédé selon les revendications 1 à 4, dans lequel ledit objet est une unité de refroidissement et la température de l'unité de refroidissement est contrôlée sur la base de ladite lumière visible.

6. Procédé selon la revendication 5, dans lequel l'étape de contrôle de la température de l'objet comprend l'augmentation de la température, quand ladite lumière visible est détectée à partir dudit gel généré sur la surface de l'unité de refroidissement.

7. Appareil de détection de la formation de glace ou de gel sur un objet et de contrôle de la température d'un objet, l'appareil comprenant :
- une source lumineuse adaptée afin d'exposer au moins une partie de la surface dudit objet à une lumière ultraviolette, **caractérisé par**
- un détecteur de lumière adapté afin de détecter une lumière visible réfléchie à partir du gel généré sur ladite surface,
- des moyens pour contrôler la température dudit objet sur la base de la lumière visible détectée à partir dudit gel généré sur ladite surface.

8. Déshumidificateur pour diminuer l'humidité dans un environnement, ledit déshumidificateur comprenant une unité de refroidissement et ledit déshumidificateur comprenant en outre un appareil pour contrôler la température selon la revendication 7.
